Europäisches Patentamt

(19) European Patent Office

Office européen des brevets

(11) Publication number: **0 026 571**
**B1**

# EUROPEAN PATENT SPECIFICATION

(45) Date of publication of patent specification: **16.01.85**

(21) Application number: **80302821.6**

(22) Date of filing: **15.08.80**

(51) Int. Cl.⁴: **H 02 H 5/04,** H 05 B 3/34,
H 01 C 7/02

(54) Protection of electrical systems using PTC devices.

(30) Priority: **16.08.79 US 67207**

(43) Date of publication of application:
**08.04.81 Bulletin 81/14**

(45) Publication of the grant of the patent:
**16.01.85 Bulletin 85/03**

(84) Designated Contracting States:
**AT BE CH DE FR IT LI NL SE**

(56) References cited:
**DE-A-1 966 342**
**DE-A-2 821 799**
**DE-A-2 903 418**
**DE-U-1 912 979**
**GB-A-2 028 608**
**US-A-3 418 454**

(73) Proprietor: **RAYCHEM CORPORATION**
**300 Constitution Drive**
**Menlo Park California 94025 (US)**

(72) Inventor: **Doljack, Frank Anthony**
**3181 Camdon Court**
**Pleasanton California 94566 (US)**
Inventor: **Middleman, Lee Mark**
**119 Corte Madera Road**
**Portola Valley California 94025 (US)**

(74) Representative: **Dlugosz, Anthony Charles et al**
**Raychem Limited Intellectual Property Law**
**Department Faraday Road**
**Dorcan Swindon Wiltshire (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to electrical systems in which a PTC device is used to protect a circuit against a thermal or electrical fault.

PTC devices are electrical devices which contain an element having a positive temperature coefficient of resistance and which are converted to a high resistance state when they exceed a certain temperature. It is known to use PTC devices to protect electrical circuits against excessive temperatures and/or against electrical faults, e.g. excessive current—see for example US—A—2 978 665 and 3 243 753, GB—A—2 036 754, 2 038 550, 2 038 549 and "The PTC Resistor" by R. F. Blaha in Proceedings of the Electronic Components conference, 1971.

DE—A1—2 903 418 describes a heating circuit, e.g. for an electric blanket, which contains a thermally-operated circuit interruption means. The interruption means is thermally coupled to a resistor in a control circuit which is separated from the heating circuit by NTC material. When the temperature gets too high, e.g. as the result of a fault, current flows through the NTC material and the control circuit, heating the resistor and in turn operating the circuit interruption means. The only interruption means disclosed in DE—A1—2 903 418 is a one-time thermal fuse.

DE—A1—1 966 342 and GB—A—1 309 819, 1 310 129 and 1 164 826 disclose a variety of electrical systems in which a PTC device is used to control the state of an intermediate device (e.g. a discharge lamp, triac or SCR) so as to give rise to a corresponding discontinuous change in the current in a control circuit.

With reference to earlier national applications corresponding to Published British Patent Applications 2,028,608A and 2,047,487A, the applicant has voluntarily limited the scope of the present application and submitted a separate set of claims for Belgium, Holland, France and Federal Republic of Germany.

For Austria, Switzerland, Italy, Liechtenstein and Sweden, the invention provides an electrical system comprising:

(a) a power circuit which is adapted to be connected to a source of electrical power and which comprises a load and a PTC device connected in series with the load which PTC device, when heated, undergoes a continuous and reversible change to a high resistance state and

(b) a control circuit which includes at least one resistor which is thermally coupled to the PTC device; the electrical system and the resistor being such that

(1) when the system is electrically powered, it has a normal steady state operating condition in which the PTC device and the resistor play substantially no part; and

(2) when the system is electrically powered and a fault condition develops in the power circuit, current flows through the control circuit and causes heating of the resistor thereby heating the PTC device and thus substantially reducing the current through the load in the power circuit.

For Belgium, Federal Republic of Germany, France and Holland, the invention provides an electrical system as defined above with the further limitation that:

(i) the resistor and the PTC device are thermally coupled to each other by a metal strap and

(ii) the PTC device comprises a PTC element composed of a PTC conductive polymer and metal electrodes which are in direct physical contact with the PTC element and

(iii) the resistor has a power rating of at most 3 watts.

The current which flows in the control circuit when a fault condition occurs can be small, e.g. less than 200 milliamps, often less than 100 milliamps. A particularly useful system of the invention is part of an electrical heating blanket. Conventional heating blankets of this kind are disclosed in US—A—3213328, 3396265, 3418454, 3437792 and 3814899.

The PTC device will often be at a temperature of −40 to +70°C in the normal operating condition of the system, and have a resistance of 0.01 to 1.0 ohm, preferably 0.05 to 0.5 ohm. Preferably the device will be converted to the high resistance state if its temperature exceeds the normal operating temperature by more than about 10°C, its resistance rising, for example, to a value in the range of 10 to 60 kilo-ohms. Preferably the PTC device is "latched" in the high resistance state, i.e. remains in the high resistance state (even after the fault condition has ceased to exist) until current has ceased to flow through it and the device has cooled.

The PTC devices used in the present invention preferably comprise a PTC element composed of a PTC conductive polymer composition, particularly suitable devices being those described in GB—A—2038550.

Such devices are substantially superior in a number of respects to ceramic PTC devices, which typically have resistances greater than 2 ohms and cannot carry currents in excess of 500 milliamps. PTC conductive polymer devices are typically less than 30 mm, preferably less than 20 mm, in the largest dimension, with a thickness less than 10 mm, preferably less than 5 mm.

The PTC device in the power circuit must be thermally coupled to the resistor in the control circuit. The resistor may be a component which is essential to the normal operation of the system. Alternatively, and often preferably, the resistor may be one which is inserted into the control circuit for the specific purpose of sensing a fault condition and which is unimportant to the normal operation of the system. In the interest of using a resistor of small size and low cost, the resistor is preferably one which has a power rating (or "rated dissipation") of at most 3 watts, especially at most 1 watt, measured by the procedures recommended by the International Electrotechnical Commission (see for example pages 13, 35 and 37 of IEC Publication No. 115—1). Such resistors are for example carbon composition, carbon film or wire-wound resistors, typically tubular components of circular cross-section with diameters from 1.5 to 12 mm and lengths from 3 to 50 mm.

The thermal coupling between the PTC device and the resistor is preferably such that the "trip time" of the PTC device (i.e. the time taken to convert the device to the high resistance state after the fault condition has occurred) is less than 5 minutes, preferably less than 2 minutes. In any event, the trip time should be short enough to avoid permanent damage to any component of the system, including the resistor to which the PTC device is thermally coupled. In one embodiment, the device and the resistor are thermally coupled by means of a thermally conductive polymeric composition, e.g. a silicone or epoxy resin containing a thermally conductive filler; the device and the resistor can be encapsulated in such a composition. However, such thermal coupling alone is often insufficient to give sufficiently short trip times, and it is preferred that the device and the resistor are thermally (and optionally also mechanically) coupled by means of a metal strap which at least partially encircles the two components. The metal strap preferably extends over at least 7%, e.g. at least 20%, of the total surface area of the PTC device. The strap may be, for example, of copper or aluminum. The ratio of the largest cross-sectional dimension of the resistor to the largest dimension of the PTC device coupled thereto by a metal strap may be for example 2 to 0.05. A thermally conductive polymeric composition can of course be used in addition to the metal strap.

The invention is illustrated in the accompanying drawings, in which

Figures 1 and 2 are schematic drawings of electrical systems of the invention, and

Figure 3 shows the thermal and mechanical coupling of a PTC device to a resistor.

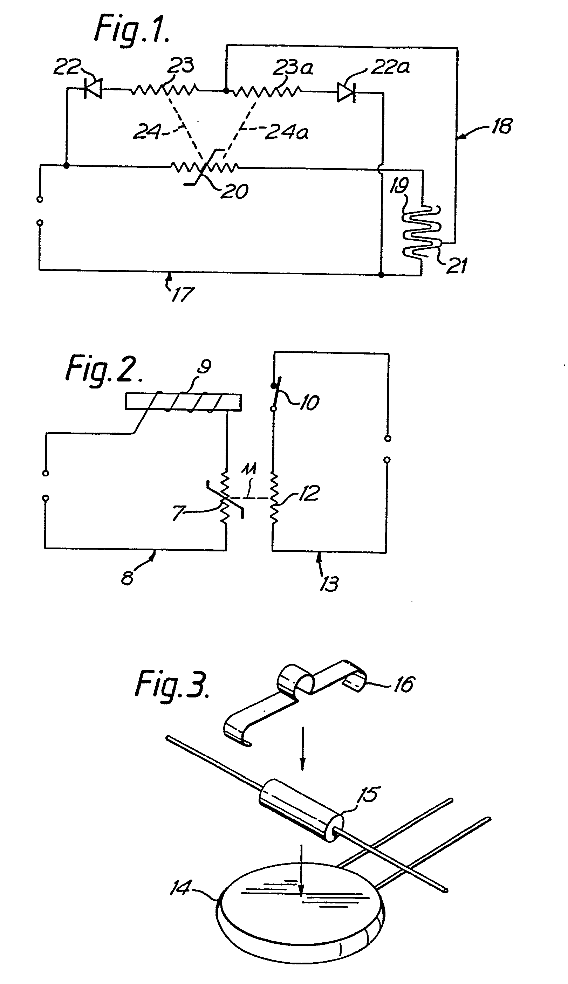

Referring now to Figure 1, this shows an electrical system for a heating blanket.

Power circuit 17 comprises a heating wire 19 which extends throughout the area of the blanket to be heated and a PTC device 20 in series with heating wire 19. Control circuit 18 comprises a sensor wire 21, two diodes 22 and 22a and two resistors 23 and 23a. The sensor wire 21 is separated from the heating wire 19 by a material which is an insulator under normal operating conditions but which has a negative temperature coefficient of resistance such that when any portion of the blanket overheats, the material becomes conductive and permits significant current to flow from the heating wire 19 to the sensor wire 21 and thus through the control circuit 18. PTC device 20 is thermally coupled to resistors 23 and 23A by thermal coupling means 24 and 24a. When the blanket is in use, power circuit 17 is connected to an AC power source. Under normal operating conditions, current flows through the heating wire 19 and the PTC device 20, but is prevented from flowing through the resistors 23 and 23a by diodes 22 and 22a. However, when any portion of the blanket overheats, the material separating the heating wire 19 from sensor wire 21 becomes conductive and current flows to the sensor wire and through the control circuit, including resistors 23 and 23a. Heat generated by the flow of current through resistors 23 and 23a is transferred by thermal coupling means 24 and 24a to PTC device 20, causing the PTC device to heat and thus to change to a high resistance state. In the high resistance state, the resistance of the PTC device is sufficiently high to significantly reduce current through the power circuit and prevent overheating of the blanket. It will be noted that in this type of system, the PTC device can be physically remote from the load which it protects (in Figure 1, the heating wire).

Referring now to Figure 2, control circuit 8 comprises a PTC device 7 and a relay 9. Power circuit 13 comprises a resistive load 12 which is thermally coupled to PTC device 7 by thermal coupling means 11 and a switch 10 which is controlled by relay 9. In use of the system, the control circuit is connected to a first power supply, thus energising the relay 9 and closing the switch 10. The power circuit is connected to a second power supply. If a fault condition occurs in the power circuit which cause the resistor 12 to overheat, e.g. an excessive current, this converts the PTC device to the high resistance state, reducing the current in the control circuit and deenergising the relay to cause the switch 10 to open.

The term "relay" is used herein to include any component which controls the opening and closing of the switch in the power circuit depending on the current passing through the relay. For example, in a system similar to that shown in Figure 2, the PTC device can be placed in parallel with a relay which opens the switch in the power circuit when the current through the relay is increased.

Referring now to Figure 3, this is an exploded view of a PTC device 14, a resistor 15 and a metal strap 16 which is used to mechanically and thermally couple device 14 and resistor 15.

The invention is further illustrated by the following Example.

Example

This Example simulates the behavior of a PTC device and a pair of resistors thermally coupled thereto when an electrical system as in Figure 1 is subject to a fault condition resulting from overheating of a part of the heating blanket. The PTC resistor was placed in a power circuit which also included a 230 volt AC power source and a 400 ohm. resistor (equivalent to the heating wire of the blanket), the current in the circuit being 0.575 amp. The resistors were connected in parallel in a control circuit including a 27 volt DC power source and a variable resistor so that the current through the resistors could be carried to produce the desired level of power consumption therein.

The PTC device consisted of a PTC element in the form of a disc 1.9 cm in diameter and 0.2 cm thick, with an electrode of nickel-plated copper mesh embedded in each face. The PTC element was composed of a dispersion of carbon black in a blend of high density polyethylene and an ethylene/acrylic acid copolymer. The resistance of the PTC device in its low resistance state was 0.1 ohm and in its high resistance state was about $10^6$ ohm. The PTC device was encapsulated with epoxy resin or unencapsulated, as indicated for each test.

Seven different tests were carried out, using different resistors and different thermal coupling means, as described below. In each test, two resistors were attached to the PTC device, one resistor on each side. In tests A and B, the resistors used were 1 watt, 1.25×0.5 cm cylindrical carbon composition resistors and the PTC devices were unencapsulated. In tests C, D, E, F and G, the resistors used were 1 watt, 1.43×0.5 cm cylindrical carbon film resistors and the PTC devices used were encapsulated.

The resistors were thermally coupled to the PTC device as follows:

Test A:

The resistor was bonded to (and electrically insulated from) the PTC adhesive by an epoxy resin.

Test B:

A strap of copper foil, 2.2×0.6×0.025 cm, was placed on each side of the PTC device so that it encircled the resistor and extended onto the surface of the PTC device. The strip and resistor were bonded to (and electrically insulated from) the PTC device with epoxy resin.

Test C:

The resistors were attached as in Test B, and the entire unit was encapsulated with an epoxy resin.

Test D:

Copper straps were positioned as in Test B. The two ends of each strap were bonded to the PTC device with epoxy resin, and thermal grease (a silicone resin containing a heat conductive filler) was applied to all interfaces between the copper strap, the resistor and the PTC device.

Test E:

Copper straps were positioned as in Test B and epoxy resin was applied to all interfaces between the copper strips, resistors and PTC device.

Test F:

The PTC device and the resistors were encircled with a band of heat shrinkable polyethylene. Thermal grease was placed at the interfaces between the resistors and the PTC device. The band was heat shrunk to securely hold the resistors in contact with the PTC device.

Test G:

The resistors were bonded to the PTC device with a small amount of epoxy resin and thermal grease was applied to the interfaces between the resistors and the PTC device.

In each test, the following Procedures 1 and 2 were followed.

Procedure 1

The control circuit was adjusted so that each resistor was consuming about 2 watts (current about 140 milliamps). The control circuit was disconnected as soon as the PTC device had tripped and the trip time was recorded. The power circuit was disconnected and the device allowed to cool before Procedure 2 was followed. The resistors did not suffer any damage in this procedure in any of the Tests.

Procedure 2

One of the resistors in the control circuit was disconnected and the circuit was adjusted so that the remaining resistor was consuming about 7.5 watts. The control circuit was disconnected as soon as the PTC device had tripped and the trip time was recorded. The resistance of the resistor was measured, and it was found that in tests A, F and G the resistance had dropped, from 100 ohms to 90 ohms in Test A and from 100 ohms to 97 ohms in Test F and G. In Test F the heat-shrunk band smoked and split open during Procedure 2, and in Test G the epoxy joint failed during Procedure 2.

The Table below shows the trip times (in minutes) recorded during the tests

0 026 571

TABLE

| Test | A | B | C | D | E | F | G |
|---|---|---|---|---|---|---|---|
| Procedure 1 | 1.9 | 1.5 | 2.9 | 2.8 | 3.3 | 4.7 | 4.7 |
| Procedure 2 | 1.1 | 0.7 | 1.4 | 1.2 | 1.6 | 2.0 | 2.1 |

## Claims for the Contracting States; AT CH IT LI SE

1. An electrical system comprising:

(a) a power circuit (17) which is adapted to be connected to a source of electrical power and which comprises a load (19) and a PTC device (20) connected in series with the load (19) which PTC device (20), when heated, undergoes a continuous and reversible change to a high resistance state and

(b) a control circuit (18) which includes at least one resistor (23, 23a) which is thermally coupled to the PTC device (20); the electrical system and the resistor being such that

(1) when the system is electrically powered, it has a normal steady state operating condition in which the PTC device (20) and the resistor (23, 23a) play substantially no part; and

(2) when the system is electrically powered and a fault condition develops in the power circuit (17) current flows through the control circuit (18) and causes heating of the resistor (23, 23a), thereby heating the PTC device (20) and thus substantially reducing the current through the load (19) in the power circuit (17).

2. A system according to Claim 1 wherein the resistor and the PTC device are thermally coupled to each other by a metal strap (16) which extends over at least 20% of the surface of the PTC device.

3. A system according to Claim 1 or 2 wherein the PTC device comprises a PTC element composed of a PTC conductive polymer and metal electrodes which are in direct physical contact with the PTC element.

4. A system according to any one of the preceding claims wherein the resistor has a power rating of at most 3 watts, preferably at most 1 watt.

5. An electrical system comprising:

(a) a power circuit (13) which is adapted to be connected to a source of electrical power and which comprises a switch (10) which is controlled by a relay (9), a load and at least one resistor (12) which plays substantially no part in the normal steady state operation of the system but which generates heat when a fault condition causes excessive current to flow through the power circuit (13); and

(b) a control circuit (8) which is adapted to be connected to a source of electrical power and which comprises the relay (9) which controls the switch (10) in the power circuit (13) and a PTC device (7) which is thermally coupled to said resistor (12) and electrically connected to the said relay (9) so that when the system is electrically powered and a fault condition causes excessive current to flow through the power circuit (13), the PTC device (7) is heated by the resistor (12) and undergoes a continuous change to a high resistance state, thereby causing the current through the relay (9) to undergo a corresponding continuous change and thus activating the relay (9) to open the switch (10) in the power circuit (13).

6. A system according to claim 5 wherein the relay (9) is in series with the PTC device (7).

7. A system according to claim 5 wherein the relay (9) is in parallel with the PTC device (7).

8. A system according to any one of claims 5 to 7 wherein the resistor and the PTC device are thermally coupled to each other by a metal strap (16) which at least partially encircles the resistor and extends over at least 7%, preferably at least 20%, of the surface of the PTC device.

9. A system according to any one of claims 5 to 8 wherein the resistor has a power rating of at most 3 watts, preferably at most 1 watt.

## Claims for the Contracting States: BE DE FR NL

1. An electrical system comprising:

(a) a power circuit (17) which is adapted to be connected to a source of electrical power and which comprises a load (19) and a PTC device (20) connected in series with the load (19) which PTC device (20), when heated, undergoes a continuous and reversible change to a high resistance state and

(b) a control circuit (18) which includes at least one resistor (23, 23a) which is thermally coupled to the PTC device (20), wherein

(i) the resistor and the PTC device are thermally coupled to each other by a metal strap (16) and

(ii) the PTC device comprises a PTC element composed of a PTC conductive polymer and metal electrodes which are in direct physical contact with the PTC element and

(iii) the resistor has a power rating of at most 3 watts, the electrical system and the resistor being such that

(1) when the system is electrically powered, it has a normal steady state operating condition in which the PTC device (20) and the resistor (23, 23a) play substantially no part; and

5

(2) when the system is electrically powered and a fault condition develops in the power circuit (17), current flows through the control circuit (18) and causes heating of the resistor (23, 23a), thereby heating the PTC device (20) and thus substantially reducing the current through the load (19) in the power circuit (17).

2. An electrical system comprising:

(a) a power circuit (13) which is adapted to be connected to a source of electrical power and which comprises a switch (10) which is controlled by a relay (9), a load and at least one resistor (12) which plays substantially no part in the normal steady state operation of the system but which generates heat when a fault condition causes excessive current to flow through the power circuit (13); and

(b) a control circuit (8) which is adapted to be connected to a source of electrical power and which comprises the relay (9) which controls the switch (10) in the power circuit (13) and a PTC device (7) which is thermally coupled to said resistor (12) and electrically connected to the said relay (9) so that when the system is electrically powered and a fault condition causes excessive current to flow through the power circuit (13), the PTC device (7) is heated by the resistor (12) and undergoes a continuous change to a high resistance state, thereby causing the current through the relay (9) to undergo a corresponding continuous change and thus activating the relay (9) to open the switch (10) in the power circuit (13).

3. A system according to claim 2 wherein the relay (9) is in series with the PTC device (7).

4. A system according to claim 2 wherein the relay is in parallel with the PTC device.

5. A system according to any one of claims 2 to 4 wherein the resistor and the PTC device are thermally coupled to each other by a metal strap (16) which extends over at least 20% of the surface of the PTC device.

6. A system according to any one of claims 2 to 5 wherein the resistor has a power rating of at most 3 watts, preferably at most 1 watt.

**Patentansprüche für die Vetragsstaaten: AT, CH, IT, LI, SE**

1. Elektrisches System, gekennzeichnet durch:

(a) eine Starkstromschaltung (17), die mit einer elektrischen Spannungsquelle verbindbar ist und die einen Verbraucher (19) und eine in Serie mit dem Verbraucher (19) geschaltete PTC-Vorrichtung (20) aufweist, wobei die PTC-Vorrichtung (20) bei der Erwärmung eine kontinuierliche und reversible Änderung zu einem Hochohmigen Zustand erfährt, und

(b) eine Kontrollschaltung (18), die wenigstens einen Widerstand (23, 23a) enthält, der thermisch mit der PTC-Vorrichtung (20) gekoppelt ist, wobei das elektrische System und der Widerstand derart sind, daß

(1) bei der elektrischen Stromversorgung des Systems dasselbe einen normalen stationären Betriebszustand hat, in dem die PTC-Vorrichtung (20) und der Widerstand (23, 23a) im wesentlichen keine Rolle spielen, und

(2) bei der elektrischen Stromversorgung des Systems und beim Auftreten eines Störungszustandes in der Starkstromschaltung (17) der Strom durch die Kontrollschaltung (18) fließet und die Erwärmung des Widerstands (23, 23a) bewirkt, wodurch die PTC-Vorrichtung (20) erwärmt wird und hierdurch der Strom durch den Verbraucher (19) in der Starkstromschaltung (17) beträchtlich herabgesetzt wird.

2. System nach Anspruch 1, dadurch gekennzeichnet, daß der Widerstand und die PTC-Vorrichtung thermisch miteinander durch ein Metallband (16) gekoppelt sind, das sich über wenigstens 20% der Fläche der PTC-Vorrichtung erstreckt.

3. System nach Anspruch 1 oder 2, dadurch gekennzeichnet, daß die PTC-Vorrichtung ein PTC-Element aufweist, das aus einem PTC leitenden Polymeren und Metallelektroden besteht, die im direkten köperlichen Kontakt mit dem PTC-Element sind.

4. System nach einem der vorangehenden Ansprüche, dadurch gekennzeichnet, daß der Widerstand eine Belastbarkeit von höchstens 3 Watt, vorzugsweise von 1 Watt hat.

5. Elektrisches System, gekennzeichnet durch:

(a) eine Starkstromschaltung (13), die mit einer elektrischen Spannungsquelle verbindbar ist und die einen Schalter (10), der durch ein Relais (9) gesteuert wird, einen Verbraucher und wenigstens einen Widerstand (12) aufweist, der in normalen stationären Betriebszustand des Systems im wesentlichen keine Bedeutung hat, der aber Wärme erzeugt, wenn eine Störungszustand bewirkt, daß ein zu großer Strom durch die Starkstromschaltung (13) fließt, und

(b) eine Kontrollschaltung (8), die mit einer elektrischen Spannungsquelle verbindbar ist, und das Relais 9, das den Schalter (10) in der Starkstromschaltung (13) steuert, und eine PTC-Vorrichtung (7) aufweist, die thermisch mit dem Widerstand (12) gekoppelt und elektrisch mit dem Relais (9) derart verbunden ist, daß bei der elektrischen Stromversorgung des Systems und beim Auftreten eines Störungszustandes, der einen übergroßen Strom verursacht, der durch die Starkstromschaltung (13) fließt, die PTC-Vorrichtung (7) durch den Widerstand (12) erwärmt wird und eine kontinuierliche Änderung zu einem hochohmigen Zustand erfährt, wobei bewirkt wird, daß der durch das Relais (9) gehende Strom eine entsprechende kontinuierliche Änderung erfährt und somit des Relais (9) aktiviert wird, und den Schalter (10) in der Starkstromschaltung (13) zu öffnen.

6. System nach Anspruch 5, dadurch gekennzeichnet, daß das Relais (9) in Serie zur PTC-Vorrichtung (7) geschaltet ist.

7. System nach Anspruch 5, dadurch gekennzeichnet, daß das Relais (9) parallel zur PTC-Vorrichtung (7) geschaltet ist.

8. System nach einem der Ansprüche 5 bis 7, dadurch gekennzeichnet, daß der Widerstand und die PTC-Vorrichtung thermisch miteinander durch ein Metallband (16) gekoppelt sind, das wenigstens den Widerstand teilweise umgibt und sich über wenigstens 7%, vorzugsweise wenigstens 20% der Fläche der PTC-Vorrichtung erstreckt.

9. System nach einem der Ansprüche 5 bis 8, dadurch gekennzeichnet, daß der Widerstand eine Belastbarkeit von höckstens 3 Watt, vorzugsweise von höchstens 1 Watt hat.

**Patentansprüche für die Vertragsstaaten: BE, DE, FR, NL**

1. Elektrisches System, gekennzeichnet durch:

(a) eine Starkstromschaltung (17), die mit einer elektrischen Spannungsquelle verbindbar ist und die einen Verbraucher (19) und eine in Serie mit dem Verbracher (19) geschaltete PTC-Vorrichtung (20) aufweist, wobei die PTC-Vorrichtung (20) bei der Erwärmung eine kontinuierliche und reversible Änderung zu einem hochohmigen Zustand erfährt, und

(b) ein Kontrollschaltung (18), die wenigstens einen Widerstand (23, 23a) enthält, der thermisch mit der PTC-Vorrichtung (20) gekoppelt ist, wobei

(i) der Widerstand und die PTC-Vorrichtung thermisch miteinander durch ein Metallband (16) gekoppelt sind, und

(ii) die PTC-Vorrichtung ein PTC-Element aufweist, das aus einem PTC-leitenden Polymeren und Metallelektroden besteht, die in direktem körperlichem Kontakt mit dem PTC-Element sind, und

(iii) der Widerstand eine Belastbarkeit von höchstens 3 Watt hat, und wobei das elektrische System und der Widerstand derart sind, daß

(1) bei der elektrischen Stromversorgung des Systems dasselbe einen normalen stationären Betriebszustand hat, in dem die PTC-Vorrichtung (20) und der Widerstand (23, 23a) im wesentlichen keine Rolle spielen, und

(2) bei der elektrischen Stromversorgung des Systems und beim Auftreten eines Störungszustandes in der Starkstromschaltung (17) der Strom durch die Kontrollschaltung (18) fließt und die Erwärmung des Widerstands (23, 23a) bewirkt, wodurch die PTC-Vorrichtung (20) erwämt wird und hierdurch der Strom durch den Verbraucher (19) in der Starkstromschaltung (17) beträchtlich herabgesetzt wird.

2. Elektrisches system, gekennzeichnet durch:

(a) eine Starkstromschaltung (13), die mit einer elektrischen Spannungsquelle verbindbar ist und die einen Schalter (10), der durch ein Relais (9) gesteuert wird, einen Verbraucher und wenigstens einen Widerstand (12) aufweist, der im normalen stationären Betriebszustand des Systems im wesentlichen keine Bedeutung hat, der aber Wärme erzeugt, wenn ein Störungszustand bewirkt, daß ein zu großer Strom durch die Starkstromschaltung (13) fließt, und

(b) eine Kontrollschaltung (8), die mit einer elektrischen Spannungsquelle verbindbar ist und das Relais (9), das den Schalter (10) in der Starkstromschaltung (13) steuert, und eine PTC-Vorrichtung (7) aufweist, die thermisch mit dem Widerstand (12) gekoppelt und elektrisch mit dem Relais (9) derart verbunden ist, daß bei der elektrischen Stromversorgung des Systems und beim Auftreten eines Störungszustandes, der einen übergroßen Strom verursacht, der durch die Starkstromschaltung (13) fließt, die PTC-Vorrichtung (7) durch den Widerstand (12) erwärmt wird und eine kontinuierliche Änderung zu einem hochohmigen Zustand erfährt, wobei bewirkt wird, daß der durch das Relais (9) gehende Strom eine entsprechende kontinuierliche Änderung erfährt und somit das Relais (9) aktiviert wird, un den Schalter (10) in der Starkstromschaltung (13) zu öffnen.

3. System nach Anspruch 2, dadurch gekennzeichnet, daß das Relais (9) in Serie zur PTC-Vorrichtung (7) geschaltet ist.

4. System nach Anspruch 2, dadurch gekennzeichnet, daß das Relais parallel zur PTC-Vorrichtung geschaltet ist.

5. System nach einem der Ansprüche 2 bis 4, dadurch gekennzeichnet, daß der Widerstand und die PTC-Vorrichtung thermisch miteinander durch ein Metallband (16) gekoppelt sind, das sich über wenigstens 20% der Fläche der PTC-Vorrichtung erstreckt.

6. System nach einem der Ansprüche 2 bis 5, dadurch gekennzeichnet, daß der Widerstand eine Belastbarkeit von höchstens 3 Watt, vorzugsweise höchstens 1 Watt, hat.

**Revendications pour les Etats Contractants: AT CH IT LI SE**

1. Système électrique comportant:

(a) un circuit d'alimentation (17) qui est destiné à être relié à une source d'énergie électrique et qui comporte une charge (19) et un dispositif PTC (20) relié en série avec la charge (19), lequel dispositif PTC (20), lorsqu'il est chauffé, subit une modification continue et réversible vers une condition de résistance élevée; et

(b) un circuit de commande (18) qui comporte au moins une résistance (23, 23a) laquelle est thermiquement couplée au dispositif PTC (20), le système électrique et la résistance étant tels que:

(1) lorsque le système est mis sous tension électrique, is est en condition de fonctionnement permanent normal dans lequel le dispositif PTC (20) et la résistance (23, 23a) ne jouent pratiquement aucun rôle; et

(2) lorsque le système est mis sous tension électrique et qu'une condition de défaut se crée dans le circuit d'alimentation (17), le courant circule dans le circuit de commande (18) et provoque l'échauffement de la résistance (23, 23a), chauffant par conséquent le dispositif PTC (20) et réduisant ainsi fortement le courant dans la charge (19) dans le circuit d'alimentation (17).

2. Système selon la revendication 1, dans lequel la résistance et le dispositif PTC sont thermiquement couplés l'un à l'autre par une barrette métallique (16) qui se situe sur au moins 20% de la surface du dispositif PTC.

3. Système selon l'une des revendications 1 et 2, dans lequel le dispositif PTC comporte un élément PTC composé d'un polymère conducteur PTC et d'électrodes métalliques qui sont en contact physique direct avec l'élément PTC.

4. Système selon l'une des revendications 1 à 3, dans lequel la résistance a une puissance nominale d'au plus 3 W, de préférence d'au plus 1 W.

5. Système électrique comportant:

(a) un circuit d'alimentation (13) qui est destiné à être relié à une source d'énergie électrique et qui comporte un commutateur (10) qui est commandé par un relais (9), une charge et au moins une résistance (12) qui ne joue pratiquement aucun rôle en fonctionnement permanent normal du système, mais qui crée de la chaleur lorsqu'une condition de défaut entraîne la circulation d'un courant excessif dans le circuit d'alimentation (13); et

(b) un circuit de commande (8) qui est destiné à être relié à une source d'énergie électrique, et qui comporte le ralais (9) qui commande le commutateur (10) du circuit d'alimentation (13) et un dispositif PTC (7), qui est thermiquement couplé à ladite résistance (12) et électriquement relié audit relais (9), de sorte que, quand le système est mis sous tension électrique et qu'une condition de défaut entraîne la circulation d'un courant excessif dans le circuit d'alimentation (13), le dispositif PTC (7) est chauffé par la résistance (12) et subit une modification continue vers une condition de résistance élevée, amenant par conséquent le courant dans le ralais (9) à subir une modification continue correspondante, et amenant ainsi le ralais (9) à ouvrir le commutateur (10) dans le circuit d'alimentation (13).

6. Système selon la revendication 5, dans lequel le relais (9) est un série avec le dispositif PTC (7).

7. Système selon la revendication 5, dans lequel le relais est un parallèle avec le dispositif PTC.

8. Système selon l'une des revendications 5 à 7, dans lequel la résistance et le dispositif PTC sont thermiquement couplés l'un à l'autre par une barrette métallique (16), qui entoure au moins en partie la résistance et se situe sur au moins 7%, de préférence au moins 20%, de la surface du dispositif PTC.

9. Système selon l'une des revendication 5 à 8, dans lequel la résistance a une puissance nominale d'au plus 3 W, de préférence d'au plus 1 W.

**Revendications pour les Etats Contractants: BE, DE, FR, NL**

1. Système électrique comportant:

(a) un circuit d'alimentation (17) qui est destiné être relié à une source d'énergie électrique et qui comporte une charge (19) et un dispositif PTC (20) relié en série avec la charge (19), lequel dispositif PTC (20), lorsqu'il est chauffé, subit une modification continue et réversible vers une condition de résistance élevée; et

(b) un circuit de commande (18) qui comporte au moins une résistance (23, 23a), laquelle est thermiquement couplée au dispositif PTC (20), dans lequel:

(i) la résistance et le dispositif PTC sont thermiquement couplés l'une à l'autre par une barrette métallique (16),

(ii) le dispositif PTC comporte un élément PTC composé d'un polymère conducteur PTC et d'électrodes métalliques qui sont en contact physique direct avec l'élément PTC, et

(iii) la résistance a une puissance nominale d'au plus 3 W, le système électrique et la résistance étant tel qui:

(1) lorsque le système est mis sous tension électrique, il est en condition de fonctionnement permanent normal dans lequel le dispositif PTC (20) et la résistance (23, 23a) ne jouent pratiquement aucun rôle; et

(2) lorsque le système est mis sous tension électrique et qu'une condition de défaut se crée dans le circuit d'alimentation (17), le courant circule dans le circuit de commande (18) et provoque l'échauffement de la résistance (23, 23a), chauffant par conséquent le dispositif PTC (20) et réduisant ainsi fortement le courant dans la charge (19) dans le circuit d'alimentation (17).

2. Système électrique comportant:

(a) un circuit d'alimentation (13) qui est destiné à être relié à une source d'énergie électrique et qui comporte un commutateur (10) qui est commandé par un relais (9), une charge et au moins une résistance (12) qui ne joue pratiquement aucun rôle en fonctionnement permanent normal du système, mais qui crée de la chaleur lorsqu'une condition de défaut entraîne la circulation d'une courant excessif dans le circuit d'alimentation (13); et

(b) un circuit de commande (8) qui est destiné à être relié à une source d'énergie électrique et qui comporte le relais (9) qui commande le commutateur (10) du circuit d'alimentation (13) et un dispositif PTC (7) qui est thermiquement couplé à ladite résistance (12) et électriquement relié audit relais (9), de sorte que, quand le système est mis sous tension électrique et qu'une condition de défaut entraîne la circulation d'un courant excessif dans le circuit d'alimentation (13), le dispositif PTC (7) est chauffé par la résistance (12) et subit une modification continue vers une condition de résistance élevée entraînant par conséquent le courant dans le relais (9) à subir une modification continue correspondante, et amenant ainsi le relais (9) à ouvrir le commutateur (10) dans le circuit d'alimentation (13).

3. Système selon la revendication 2, dans lequel le relais (9) est en série avec le dispositif PTC (7).

4. Système selon la revendication 2, dans lequel le relais est en parallèle avec le dispositif PTC.

5. Système selon l'une des revendications 2 à 4, dans lequel la résistance et le dispositif PTC sont thermiquement couplés l'une à l'autre par une barrette métallique (16) qui se situe sur au moins 20% de la surface du dispositif PTC.

6. Système selon l'une des revendications 2 à 5, dans lequel la résistance a une puissance nominale d'au plus 3 W, de préférence d'au plus 1 W.

**Fig.1.**

**Fig.2.**

**Fig.3.**

1